# EUROPÄISCHE PATENTANMELDUNG

(11) **EP 1 830 235 A2**
(43) Veröffentlichungstag der Anmeldung: **05.09.2007**
(21) Anmeldenummer: 07010841.0
(22) Anmeldetag: 14.05.2004
(51) Int. Cl.: G05B 19/4069

(54) **Auslegung von Werkzeugen und Prozessen für die Umformtechnik**

(30) Priorität: 15.05.2003 CH 869032003
(62) Teilanmeldung aus: 04732915.6
(71) Anmelder: Autoform Engineering GmbH, 8173 Neerach (CH)
(72) Erfinder: Kubli, Waldemar, 8173 Neerach (CH); Zwickl, Titus, 8404 Winterthur (CH); Brühl, Oliver, 79787 Lauchringen (DE)
(74) Vertreter: Frei Patent Attorneys

(57) **Zusammenfassung**

In einem Verfahren, einem Datenverarbeitungssystem und einem Computerprogramm zum Auslegen von Werkzeugen und/oder Prozessen für die Herstellung von Umformteilen werden aus einem Satz von nominellen Simulationsparametern (d,n) durch Simulation eines Umformprozesses Rohdaten (r) zur Beschreibung einer Geometrie und eines Zustandes eines umgeformten Teiles berechnet..

Die im Verfahren durchgeführten Schritte beinhalten, dass
• aus dem Satz von nominellen Simulationsparametern (d,n) in einem Simulationsdurchlauf ein Satz von Rohdaten (r) berechnet und gespeichert wird,
• der vorangehende Schritt unter Variation der Simulationsparameter (d,n) um die nominellen Simulationsparameter (d,n) mehrmals wiederholt wird, und dadurch weitere Sätze von Rohdaten (r) erzeugt und gespeichert werden, und
• aus einem Satz neuer Simulationsparameter d',n' und den gespeicherten Rohdaten r durch Interpolation ein neuer Satz von Rohdaten r' berechnet wird.

Vorzugsweise geschieht eine Berechnung statistischer Kennwerte (Cr) der Rohdaten (r) und wird eine visuelle Darstellung dieser statistischen Kennwerte (Cr) auf einer visuellen Darstellung eines am Umformprozess beteiligten Gegenstands, insbesondere des umgeformten Teiles, eines Teiles vor der Umformung oder der Werkzeuggeometrie, erzeugt (11).

## Beschreibung

Die Erfindung bezieht sich auf das Gebiet der Auslegung von Werkzeugen und/oder Prozessen für die Umformtechnik. Sie bezieht sich auf ein Verfahren, ein Datenverarbeitungssystem und ein Computerprogramm zum Auslegen von Werkzeugen und Prozessen für die Herstellung von Umformteilen gemäss dem Oberbegriff der unabhängigen Patentansprüche, sowie auf einen Datenträger.

### STAND DER TECHNIK

Umformteile, insbesondere Blechumformteile werden in der Regel durch Tiefziehen hergestellt. Das Halbzeug, sogenannte Blechplatinen, werden zu diesem Zweck in mehrteilige Umformwerkzeuge gelegt. Mittels Pressen, in denen die Umformwerkzeuge eingespannt sind, werden die Teile geformt. Die Teile werden in der Regel über mehrere Umformstufen wie Ziehen, Nachschlagen, Einstellen, etc. kombiniert mit Beschneidschritten aus einer flachen Blechplatine hergestellt.

Zur Auslegung von Umformwerkzeugen, also beispielsweise Stempel, Matrizen und Blechhaltem, sowie von Umformprozessen, also beispielsweise Werkzeugkräfte, Ziehleisten, Schmierung, Form und Material für die Blechplatine, werden CAD/CAE (computer aided design / computer aided engineering) Programme eingesetzt. Diese simulieren respektive modellieren mittels Finite-Elemente Modellen einen Umformprozess anhand von Simulationsparametern. Simulationsparameter beschreiben einerseits eine Geometrie der im Umformprozess verwendeten Werkzeuge, und andererseits Prozessparameter. Als Prozessparameter werden im Folgenden verschiedene Umformparameter wie Schmierung, Bearbeitungskräfte etc., und auch Materialparameter wie Blechplatinenform, Dicke, Materialeigenschaften, Walzrichtung etc. betrachtet. Die Simulationsprogramme erzeugen eine Beschreibung der Geometrie eines Bleches nach der Umformung sowie die Verteilung zugehöriger Zustandsvariablen wie Dehnungen und Spannungen im umgeformten Blech. Gleichzeitig berechnen sie bestimmte charakteristische Kennwerte, Performance-Variablen genannt, die eine Qualität des Erzeugnisses ausdrücken.

Seit einigen Jahren werden dabei auch stochastische Simulationen durchgeführt, d.h. statt einer einzelnen Simulation werden viele Simulationen mit statistisch variierten Designparametern und statistisch variierten Noiseparameten oder Störparametern durchgeführt. Designparameter sind kontrollierbare Simulationsparameter wie die Geometrie der Werkzeuge. Störparameter sind nicht-kontrollierbare Simulationsparameter wie Variationen in der Blechdicke und von Materialeigenschaften eines Bleches. Durch Variation dieser Parameter kann die Robustheit, das heisst die Empfindlichkeit des ausgelegten Designs gegenüber Parameter-Streuungen und seine Kontrollierbarkeit beurteilt werden. Dies ist wichtig, da in der Realität immer Abweichungen vom Simulationsmodell auftreten, beispielsweise in Folge von Schwankungen in Herstellungsprozessen, Vereinfachungen des Simulationsmodells, numerischen Effekten und nichtlinearen Effekten. Zur Beurteilung und Verbesserung eines Designs anhand der entsprechenden Simulationsresultate werden heute die Performance-Variablen vor der Simulation und vor der stochastischen Analyse definiert.

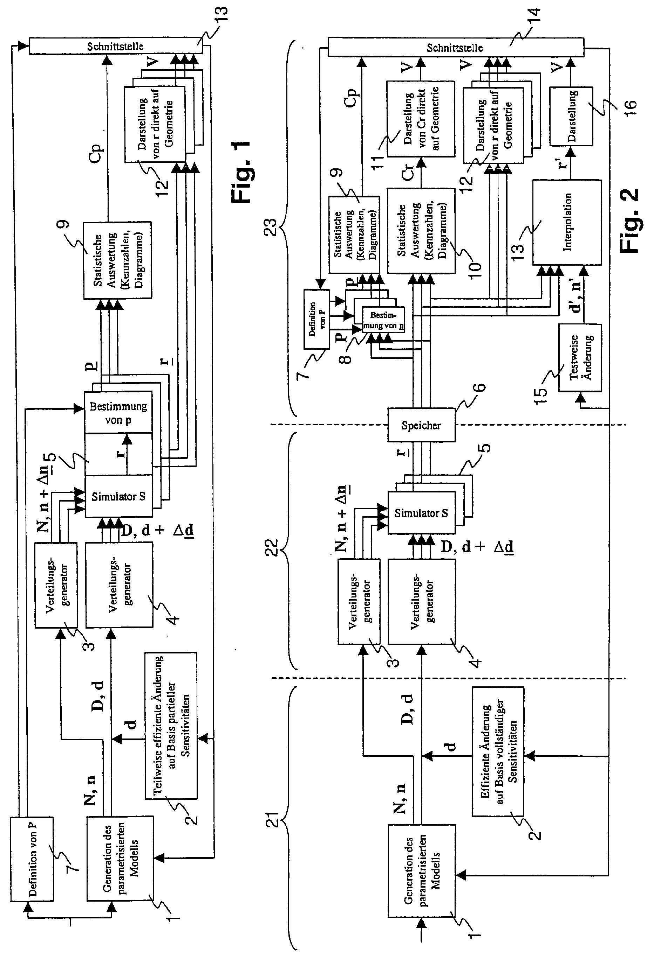

Die Figur 1 zeigt schematisch einen Datenfluss beim Design von Umformwerkzeugen und von Umformprozessen gemäss dem Stand der Technik: Eine Definition von Performance-Variablen 7 wird dabei zusammen mit einer Modellgenerierung 1 durchgeführt. Simulationsparameter d,n aus der Modellgenerierung 1 werden einem Simulator 5 zugeführt, der für variierende Simulationsparameter d,n jeweils Rohdaten r und Performance-Variablen p berechnet. Die Rohdaten r werden in einer Darstellung der Rohdaten 12 auf einem 3D-Modell des Umformteils in einer Farbkonturdarstellung visualisiert. Aus den Performance-Variablen p werden in einer statistischen Auswertung 9 Kennwerte Cp der Performance-Variablen p berechnet. Zusammen mit den Design- und StörParametern werden die Performance-Variablen und die Kennwerte Cp typischerweise in Diagrammen dargestellt, z.B. in Scatter-Plots, Histogrammen, Korrelationsdiagrammen etc.

Die Auswertung stochastischer Simulationen ist heute wenig anschaulich. Da nur einzelne Performance-Variablen zur Verfügung stehen, fehlen oft lokale Informationen an gewissen geometrischen Orten des Systems. Da die Performance-Variablen vor der stochastischen Analyse definiert werden müssen, fehlen bei der Auswertung oft Performance-Variablen, deren Notwendigkeit erst bei der Auswertung erkannt wird; um diese zu erhalten, müssten die aufwendigen Simulationen und die stochastische Analyse nochmals durchgeführt werden. Die Darstellung der Performance-Variablen in Diagrammen ist indirekt und damit abstrakt und erfordert ein hohes Vorstellungsvermögen. Diese Nachteile tragen dazu bei, dass stochastische Simulationen heute noch sehr wenig durchgeführt werden.

Die US 6,035,242 betrifft ein Simulationsverfahren zur Bestimmung eines Stempelhubes (target stroke), mit welchem eine geforderte Biegung eines Blechteiles erzielt wird. Dabei sind einerseits die Biegung und andererseits die Rückfederung zu berücksichtigen. Dazu wird in einem iterativen Näherungsverfahren (mit Flussdiagramm gem. Fig. 6) der Simulationsparameter D ("target stroke value") angepasst (Block S9 im Flussdiagramm), bis der Zielwinkel der Biegung erreicht ist. Bei der beschriebenen Methode handelt es sich also um eine iterative Anpassung eines einzelnen Simulationsparameters. Die Parameter werden aufgrund von zwei Simulations-ergebnissen nach einer festen Regel und zielorientiert angepasst.

Die DE 195 00 245 A1 betrifft ein ähnliches, ebenfalls iteratives Verfahren. Das Verfahren betrifft hier aber die Form einer Niederhalterkontaktoberfläche. Die simulierte Form durchläuft, ausgehend von einer Ausgangsstellung, verschiedene Formen, bis eine optimierte endgültige Form erreicht ist (Fig. 8).

### DARSTELLUNG DER ERFINDUNG

Es ist deshalb Aufgabe der Erfindung, ein Verfahren, ein Datenverarbeitungssystem und ein Computerprogramm zum Auslegen von Werkzeugen und/oder Prozessen für die Herstellung von Umformteilen der eingangs genannten Art zu schaffen, welche die oben genannten Nachteile beheben.

Diese Aufgabe lösen ein Verfahren, ein Datenverarbeitungssystem und ein Computerprogramm zum Auslegen von Werkzeugen und/oder Prozessen für die Herstellung von Umformteilen mit den Merkmalen der entsprechenden unabhängigen Patentansprüche.

Es werden also Rohdaten in jedem Rechenpunkt des Simulationsmodells gespeichert. Die Rechenpunkte sind üblicherweise Integrationspunkte und Knotenpunkte eines Finiten Elemente (FE)-Modells. Die Rohdaten sind direkte Resultate der Simulation des Umformprozesses. Sie beschreiben beispielsweise die Geometrie des umgeformten Teiles, Verteilung der Blechdicke, Dehnungen oder Spannungen im umgeformten Material, Verteilung von Risskriterien, Verschiebungsverteilung infolge Rückfederung nach Entnahme aus dem Werkzeug, etc. Die Rohdaten beschreiben also jeweils lokale Grössen für eine Vielzahl von Punkten des Simulationsmodells, vorzugsweise für alle Punkte des Simulationsmodells. Die Simulation ist beispielsweise eine genaue inkrementelle Simulation des gesamten Umformprozesses, oder eine einfache Abschätzung der Umformbarkeit, basierend z.B. auf einem Einschrittverfahren.

Die Simulation wird, ausgehend von nominellen Simulationsparametern, für leicht um diese variierte Simulationsparameter wiederholt, und die erzeugten Rohdaten werden wiederum gespeichert. In dieser Weise werden mehrere Sätze von Rohdaten berechnet. Die Rechenzeit für die Vielzahl von benötigten Simulationsdurchläufen beträgt mehrere Stunden bis Tage.

Aus diesen gespeicherten Rohdaten werden für jeden Satz von Rohdaten entsprechende Performance-Variablen berechnet. Um vergleichbare Performance-Variablen aus den einzelnen Simulationen zu erhalten, werden die Rohdaten der einzelnen Simulationen einander zugeordnet, beispielsweise indem räumlich gleich oder nächst gelegene Rechenpunkte einander zugeordnet werden. Die Auswertung bezieht sich also vorzugsweise auf raumfeste Punkte (im Gegensatz zu materialfesten Punkten). Damit können beliebige, beispielsweise auch adaptiv angepasste Rechengitter, die dasselbe Objekt in verschiedenen Simulationsläufen darstellen, miteinander in Bezug gebracht werden, respektive raumfeste Punkte aus verschiedenen Simulationen einander zugeordnet werden. Dabei kann auch eine der Simulationen als Referenzsimulation ausgewählt werden, auf welche sich die anderen Simulationen beziehen.

Performance-Variablen charakterisieren bestimmte interessierende Eigenschaften des umgeformten Teiles und Performance-Variablen erlauben eine Beurteilung einer Qualität des Teiles respektive des Umformprozesses. Performance-Variablen beziehen sich vorzugsweise auf einzelne Punkte oder auf einzelne Bereiche des Teiles mit jeweils einer vorgegebenen räumlichen Ausdehnung. Beispielsweise charakterisiert eine Performance-Variable einen Extremwert oder einen Durchschnittswert einer vorgegebenen Modelleigenschaft oder von Rohdaten innerhalb eines solchen Bereiches. Performance-Variablen beschreiben beispielsweise eine maximale Blechausdünnung in einem bestimmten rissgefährdeten Bereich des Bleches, eine minimale Ausstreckung in einem bestimmten wenig ausgeformten Bereich des Bleches, eine maximale Verschiebung infolge Rückfederung im Bereich eines Teileflansches, eine erforderliche Stempelkraft etc.

Es entstehen so mehrere Sätze von Performance-Variablen. Diese werden statistisch ausgewertet, indem beispielsweise Mittelwerte, Streuungen, etc. der Performance-Variablen oder Sensitivitäten, Korrelationen, etc. der Performance-Variablen gegenüber den Design- und Störparametern bestimmt werden.

Gemäss der Erfindung werden nun aber auch die gespeicherten Rohdaten statistisch ausgewertet. Dabei werden in jedem Rechenpunkt die Rohdaten der einzelnen Simulationen einander zugeordnet, z.B. wie oben erwähnt über minimale räumliche Abstände, und statistische Kennwerte der Rohdaten bestimmt, wie zum Beispiel Mittelwerte, Streuungen, Sensitivitäten, Korrelationen, etc. Bestimmte dieser Kennwerte werden einer Visualisierung eines 3D-Modells des umgeformten Teiles überlagert. Dies geschieht beispielsweise in einer Farbkonturdarstellung durch Einfärben des Modells in jedem Punkt des Teiles respektive seiner Oberfläche nach Massgabe eines oder mehrerer der statistischen Kennwerte in diesem Punkt. Es können beispielsweise auch direkt Prozessfähigkeitskennwerte wie Cp und Cpk-Werte nach DIN 55319 mittels Farbkonturen auf der Geometrie dargestellt werden. Alternativ dazu können die Kennwerte auch einem 3D-Modell eines anderen im Umformprozess beteiligten Gegenstands überlagert dargestellt werden, beispielsweise der Geometrie eines Teiles vor der Umformung, oder der Werkzeuggeometrie. Die Auswertung der stochastischen Analyse wird damit deutlich anschaulicher und einfacher. Beispielsweise werden Streuungen und damit die Robustheit einzelner Zielgrössen sofort erkennbar und lokalisierbar. Dadurch sind auch die Einflusszonen einzelner Parameter sofort anschaulich erkennbar. Beispielsweise kann durch farbliche Darstellung eines Streumasses der Blechdicke im umgeformten Teil sofort erkannt werden, ob und wo Zonen existieren, die wenig robust gegenüber Schwankungen der Design- und Störparameter reagieren; es kann sogar als statistische Grösse zum Beispiel die prozentuale Häufigkeit, mit der eine gegebene Minimaldicke lokal unterschritten wird, farblich auf der Geometrie dargestellt werden, was die einfache und sofortige Identifikation von Bereichen erlaubt, welche gewisse Fertigungstoleranzen nicht mehr erfüllen. Wenn nun zum Beispiel noch ein statistisches Mass der Korrelation oder der Sensitivität der Blechdicke gegenüber einem Designparameter farbig auf der gesamten Geometrie dargestellt wird, kann sofort erkannt werden, ob mit diesem Designparameter gewünschte Verbesserungen an den kritischen Stellen erreicht werden können und welche übrigen Zonen dadurch auch noch, eventuell negativ, beeinflusst würden. Bei allen diesen Analysen ist man infolge der Darstellungen der statistischen Kenngrössen auf der gesamten Geometrie nicht mehr von der richtigen Wahl einzelner Performance-Variablen an den richtigen Stellen der Geometrie abhängig, um ein lokales Problem zu erkennen. Insbesondere bei komplizierten Umformteilen ist es fast unmöglich und äusserst zeitaufwendig, alle Problemzonen bezüglich Robustheit und alle Einflussbereiche der Design- und Störparameter mit Hilfe einzelner Performance-Variablen zu erfassen, was aufwendige stochastische Simulationen stark in Frage stellt und dazu geführt hat, dass diese bisher nicht standardmässig eingesetzt wurden. Die Darstellung auf der gesamten Geometrie macht es erst möglich, mit Sicherheit alle Problemzonen in einem Umformteil zu erkennen und die Einflussbereiche und Folgen der Änderungen einzelner Simulationsparameter vollständig zu erfassen. Dadurch liefern stochastische Simulationen eine wesentlich brauchbarere Aussage, und die Anzahl langsamer Iterationsschlaufen, das heisst einer kompletten Neusimulation, zur robusten Auslegung eines Modelles kann deutlich reduziert werden.

In einer bevorzugten Variante der Erfindung werden die Performance-Variablen in einem interaktiven Verfahren berechnet und einem Benutzer angezeigt. Beispielsweise wählt ein Benutzer mit einem Zeigemittel wie einer Computermaus einen Punkt oder Bereich einer Darstellung eines umgeformten Teiles aus. Entsprechend dem ausgewählten Punkt wird eine Performance-Variable wie z.B. eine lokale Minimaldicke definiert. Andere Performance-Variablen sind beispielsweise ein Dickenhistogramm oder eine Sensitivität bezüglich eines oder mehrerer Designparameter. Aus der Definition werden anhand der gespeicherten Rohdaten entsprechende statistische Kennwerte berechnet und graphisch angezeigt. Beispielsweise zeigt ein mit einem Mauspfeil mitbewegtes oder in einem bestimmten Bildschirmbereich angeordnetes Balkendiagramm von der Art eines "Box Plots" jeweils zum aktuell ausgewählten Punkt die Materialdicke der nominellen Lösung zusammen mit der simulierten Variation der Materialdicken. Oder es wird eine Sensitivität eines Parameters im aktuellen Punkt bezüglich mehrerer Designparameter in beispielsweise einem Kuchendiagramm dargestellt. Durch Verschieben des Zeigegerätes lässt sich somit schnell ein Überblick über die verschiedenen Einflüsse und Sensitivitäten gewinnen.

In einer weiteren bevorzugten Variante der Erfindung wird zu jedem oder einer Untermenge der Sätze von Rohdaten ein Grenzformänderungsdiagramm erzeugt und einem Benutzer angezeigt. Darin sind Dehnungszustände für jeweils einzelne Rechenpunkte in einer zweidimensionalen Darstellung durch Punkte dargestellt. Für die Menge der Rechenpunkte eines Satzes von Rohdaten r resultiert eine Punktwolke, die einen Überblick über die Dehnungsbeanspruchung des Teiles gibt. Eine Grenzformänderungskurve wird in derselben Darstellung eingezeichnet. Sie grenzt ein Gebiet ab, in dem die Materialdehnung zu einem Reissen führt. Als Erweiterung des Grenzformänderungsdiagramms werden die Punktwolken mehrerer Sätze von Rohdaten einander überlagert dargestellt. Dadurch wird sichtbar, wie sich die Wahrscheinlichkeit eines Materialrisses bei Variation der Simulationsparameter verhält. Anstelle von Punktwolken können auch diese Punktwolken charakterisierende visuelle Merkmale erzeugt und angezeigt werden, zum Beispiel Hauptachsen einer eine Punktwolke annähernden Ellipse. Vorzugsweise wird durch eine dreidimensionale Darstellung oder eine Farbdarstellung die Häufigkeit einzelner Bereiche der vereinigten Punktwolken sichtbar gemacht, indem beispielsweise die Häufigkeit in der dritten Dimension histogrammähnlich aufgetragen wird.

In einer Kombination dieser Darstellung mit dem oben erwähnten interaktiven Verfahren wird nach Auswählen eines Punktes in der Darstellung des umgeformten Teiles der entsprechende nominelle Punkt und/oder die entsprechende statistisch verteilte Punktwolke im Grenzformänderungsdiagramm visuell hervorgehoben, beispielsweise durch Änderung der Punktefarbe oder -Helligkeit. Umgekehrt können nach Auswählen eines Bereiches im Grenzformänderungsdiagramm die entsprechenden Bereiche auf dem umgeformten Teil visuell hervorgehoben werden.

In der praktischen Arbeit mit einem Designsystem tritt oft das Problem auf, dass der Designer nach der Simulation erkennt, dass ein bestimmter Materialbereich Probleme einer bestimmten Art aufweisen könnte. Um diese zu quantifizieren, muss er eine entsprechende Performance-Variable definieren, die eine Beurteilung des Problems erlaubt. Beispielsweise definiert er die maximale Rückfederung eines Teileflansches als Performance-Variable, um zu beurteilen, wie stark dieser Wert infolge der Variation der Störparameter streut, also wie robust oder reproduzierbar dieser Wert gegenüber solchen Schwankungen ist, und mit welchem Designparameter dieser Wert korreliert ist, d.h. durch welchen Designparameter die Rückfederung am besten kontrolliert bzw. korrigiert werden kann.

Die neue Performance-Variable oder eine modifizierte Performance-Variable muss nun nicht in einer vollständigen stochastischen Analyse mit einer Vielzahl von Simulationsdurchläufen ermittelt werden. Stattdessen wird die neue Performance-Variable jeweils aus jedem der gespeicherten mehreren Sätzen von Rohdaten wiederholt berechnet. Die so erhaltenen mehreren, zueinander variierenden Werte der Performance-Variablen werden statistisch analysiert und optional graphisch dargestellt. Es ist also möglich, variierende und neue Performance-Variablen sehr schnell zu definieren und ihre Werte zu berechnen, ohne dass die aufwendigen Simulationen des Umformprozesses wiederholt werden müssen.

Der Designprozess besteht für den Anwender also aus zwei separaten Iterationsschlaufen: In einer langsamen Iterationsschlaufe werden stochastische Simulationen anhand von iterativ verbesserten Modellen durchgeführt und Rohdaten berechnet. In einer schnelleren Iterationsschlaufe werden die Rohdaten analysiert und iterativ die Performance-Variablen zur Charakterisierung des betrachteten Modells verbessert. Dank der Existenz der schnelleren Iterationsschlaufe können einerseits Schwachstellen im Design schneller gefunden und andererseits durch die schnelle Anpassungsmöglichkeit und Neuberechnung der Performance-Variablen kritische Stellen gezielt untersucht werden. Beispielsweise könnte in einem Materialbereich, in welchem man zu Beginn der Auslegung keine Probleme erwartete, während der Analyse der Rohdaten festgestellt werden, dass zwischen einigen Simulationen die Dicke stark schwankt. Durch Definition der minimalen Dicke in diesem Bereich als Performance-Variable und Berechnung ihrer Streuung kann nun sofort beurteilt werden, ob diese Schwankung noch innerhalb gegebener Fertigungstoleranzen liegt. Wenn nicht, also wenn z.B. eine untere Dickengrenze mit zu hoher Häufigkeit unterschritten wird, kann durch Auswertung der Korrelation dieser Performance-Variablen gegenüber den Designparametern, z.B. der Rückhaltewirkung der Ziehleisten, sofort ermittelt werden, mit welcher Ziehleiste die Dicke am besten beeinflusst werden kann. Weitere Performance-Variablen können nun definiert werden, um zu untersuchen, ob Änderungen der so ermittelten Designparameter ungünstige Effekte an anderen Stellen hervorrufen, z.B. eine zu geringe Ausstreckung des Bleches in anderen Bereichen. Mit dieser beispielhaft erläuterten Vorgehensweise können in der schnellen Iterationsschlaufe während der Auswertung mit hoher Sicherheit die richtigen Änderungen am Modell vorgenommen werden, um das Modell bezüglich gewünschter Qualität des Umformteiles und deren Robustheit zu verbessern; die Anzahl der langsamen Iterationsschlaufen wird deutlich reduziert.

In einer weiteren bevorzugten Variante der Erfindung werden aus den Rohdaten bei Bedarf einzelne weitere Sätze von Rohdaten, die nicht explizite in einem der wiederholten Simulationsläufe berechnet wurden, durch Interpolation bestimmt. Beispielsweise zeigt die stochastische Analyse, dass eine Lösung gemäss einer bestimmten Parameterkombination von Interesse sein könnte. Anstelle eines Simulationsdurchlaufs für diese Parameterkombination wird die gesamte entsprechende Lösung, also Geometrie und Materialzustand nach der Umformung, durch Interpolation aus den gespeicherten Sätzen von Rohdaten ermittelt. In dieser Weise kann ein bestimmter Parametersatz respektive die entsprechende Lösung sehr schnell mit geringem Rechenaufwand überprüft werden. Es ist nicht mehr notwendig, stundenlang auf eine testweise Auswertung zu warten.

Das Datenverarbeitungssystem zum Auslegen von Werkzeugen und Prozessen für die Herstellung von Umformteilen weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Das Computerprogramm zum Auslegen von Werkzeugen und Prozessen für die Herstellung von Umformteilen gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt einen Datenträger respektive ein computerlesbares Medium auf, auf welchem die Computerprogrammcodemittel gespeichert sind.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: schematisch einen Datenfluss beim Design von Umformwerkzeugen und Umformprozessen gemäss dem Stand der Technik; und
- Figur 2: schematisch einen Datenfluss und eine Ablaufstruktur eines Verfahrens in einer bevorzugten Ausführungsform der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

Die Figur 2 zeigt schematisch einen Datenfluss und eine Ablaufstruktur eines Verfahrens in einer bevorzugten Ausführungsform der Erfindung. Der Ablauf wird vorzugsweise mittels eines Computerprogramms, das auf einem Datenverarbeitungssystem ausgeführt wird, implementiert.

Mittels eines Modellgenerators 1 werden eine Modellstruktur und nominelle Modellparameter anhand von Daten aus einer Datei oder einem Benutzerinterface erzeugt. Dies sind vorzugsweise parametrisierte Facetten- oder Flächendaten zur Beschreibung der Geometrie der Umformwerkzeuge, parametrisierte Kurvendaten zur Beschreibung der Form von Blechplatine, von Ziehleistenverläufen und anderer Modellkurven, sowie Kenngrössen zur Beschreibung eines Materialverhaltens, der Reibung, von Ziehleisten und anderen Prozessparametern.

Die Modellstruktur und Modellparameter sind Grundlage für einen Simulator 5 und werden deshalb zusammengefasst als nominelle Simulationsparameter d,n bezeichnet. Von ihrer Art her sind die Simulationsparameter d,n aufgeteilt in Designparameter d und Störparameter n. Die Designparameter d umfassen kontrollierbare Parameter wie die Geometrieparameter der Umformwerkzeuge, die Geometrieparameter der Blechplatine, die Blechhalterkräfte, die Ziehleistenkräfte, die Schmierung, etc. Die Designparameter d beschreiben also Werkzeuge und Prozesseigenschaften. Dabei werden gemäss der Terminologie der vorliegenden Anmeldung auch kontrollierbare Parameter des geformten Materials, also beispielsweise Form und Material eines Bleches, auch als Prozessparameter betrachtet. Die Designparameter d sind durch ein Mittel zur Parametermodifikation 2, beispielsweise eine Benutzerschnittstelle, modifizierbar. Definitionen D der Designparameter d und Definitionen N der Störparameter n enthalten jeweils eine Beschreibung der jeweiligen Parameter, beispielsweise eine Regel, wie der Parameterwert zum Aufbau des Modells beiträgt. Zum Beispiel wird ein gegebener Verrundungswert an einer bestimmten Stelle in eine Modifikation von Flächen an dieser Stelle umgesetzt. Die Beschreibung kann auch eine verbale Beschreibung als Hilfe für einen Benutzer sein, oder eine Charakterisierung von Toleranzen der Parameter.

Störparameter n umfassen nicht-kontrollierbare Parameter, welche z.B. Fertigungstoleranzen oder nicht-modellierten Einflüssen unterliegen, wie die Blechdicke, die Materialeigenschaften, die Reibung, nicht genau einstellbare Blechhalterkräfte, dem Verschleiss unterliegende geometrische Parameter der Werkzeuge, etc. Je nach Problemstellung kann ein gewisser Parameter als Design- oder als Störparameter betrachtet werden.

Anhand der Simulationsparameter d,n errechnet ein Solver oder Simulator 5 Rohdaten r, welche die Geometrie und weitere Eigenschaften des erzeugten Umformteiles beschreiben. Die weiteren Eigenschaften beschreiben insbesondere einen Zustand des umgeformten Teiles, wie Dehnungen und Spannungen im umgeformten Blech und daraus abgeleitete Grössen wie Blechdicke, Versagenskriterien, etc.

Es wird eine Vielzahl von Simulationsläufen mit dem Simulator 5 durchgeführt, wobei die Designparameter d und Störparameter n jeweils durch eine zugeordnete Parametervariation der Störparameter 3 respektive eine Parametervariation der Designparameter 4 um in der Regel kleine Werte Δd respektive Δn gemäss vorgegebenen statistischen Kennwerten variiert werden. Die Variation geschieht vorzugsweise nach einem stochastischen oder Monte-Carlo-Verfahren. In einer anderen Variante der Erfindung wird ein deterministisches Verfahren verwendet. Dabei werden Parameter systematisch um ihren Nominalwert variiert, um mit einer möglichst kleinen Anzahl von Parameterkombinationen ein Maximum an Information zu gewinnen.

Für jeden Simulationsdurchlauf wird ein Satz von Rohdaten r erzeugt. Eine Gesamtheit aller Sätze von Rohdaten r wird in einem Speicher 6 abgelegt. In darauffolgenden Verfahrensschritten werden erstens wie üblich die Rohdaten r selber auf einer Geometrie des umgeformten Teiles beispielsweise in einer Farbkonturdarstellung dargestellt. Dies geschieht beispielsweise mittels einer Benutzerschnittstelle zur Modellanalyse 14 mit einer Projektion des berechneten 3D-Modells auf einen Bildschirm oder auf einen Ausdruck. Zweitens wird eine statistische Auswertung der Rohdaten 10 durchgeführt, welche statistische Kennwerte Cr der Rohdaten r für jeden geometrischen Punkt der Simulation einzeln ermittelt. Hierzu notwendig ist eine geometrische Zuordnung der Rohdaten der einzelnen Simulationen zueinander, welche beispielsweise über den minimalen Abstand erfolgt. Die Kennwerte Cr werden mittels einer Darstellung von statistischen Kennwerten der Rohdaten 11 ebenfalls auf einer Geometrie des umgeformten Teiles dargestellt. Grundsätzlich ist es natürlich auch möglich, nur eine Untermenge aller Rohdaten r in der statistischen Auswertung zu verwerten.

Drittens werden aus den Rohdaten r mittels Schritten respektive mittels Modulen zur Berechnung von Performance-Variablen 8 die Performance-Variablen p zu mehreren und vorzugsweise jedem einzelnen der gespeicherten Sätze von Rohdaten r berechnet. Die Berechnung geschieht anhand von Definitionen P der Performance-Variablen p. Die Definitionen P enthalten Rechenvorschriften zur Berechung der Performance-Variablen p aus den Rohdaten r, beispielsweise in Form von Programmcode. Die Performance-Variablen p erlauben für sich alleine bereits eine Aussage über die Eigenschaften und insbesondere die Qualität des Umformteiles. Die Aussage ist jedoch erheblich wertvoller, wenn sie statistische Kennwerte Cp der Performance-Variablen berücksichtigt. Diese Kennwerte Cp berücksichtigen die Gesamtheit oder eine Untermenge der Variationen der Performance-Variablen p, wie sie aus der Gesamtheit oder einer Untermenge der Rohdaten r entsprechend den Variationen 3,4 der Simulationsparameter d,n resultiert. Die einzelnen Performance-Variablen p und jeweils zugeordnete statistische Kennwerte werden vorzugsweise tabellarisch und/oder in geeigneten graphischen Darstellungen V einem Benutzer über die Benutzerschnittstelle zur Modellanalyse 14 zugänglich gemacht.

Die Benutzerschnittstelle zur Modellanalyse 14 ermöglicht eine Erstellung oder Modifikation von Definitionen von Performance-Variablen 7. Eine Neuberechnung solcher neuer respektive geänderter Performance-Variablen p ist sofort anhand der gespeicherten Rohdaten r möglich, ohne dass die sehr aufwendige Simulation 5 unter variierenden Simulationsparametern d,n erneut durchgeführt werden muss. Ebenfalls sind die statistischen Kennwerte Cp der Performance-Variablen sofort bestimmbar. Dies entspricht einer schnellen Iterationsschlaufe des Designverfahrens.

Die Benutzerschnittstelle zur Modellanalyse 14 ermöglicht auch eine Änderung der Modellstruktur und der Designparameter d, wie durch einen Pfeil zum Modellgenerator 1 und der Parametermodifikation 2 angedeutet ist. Dies entspricht einer langsamen Iterationsschlaufe des Designverfahrens. Selbstverständlich kann eine Änderung von Modellstruktur und Designparameter d auch mittels einer separaten Benutzerschnittstelle durchgeführt werden.

In einer bevorzugten Variante der Erfindung wird bei Bedarf zu bestimmten "neuen" Simulationsparametern d',n', zu denen noch keine Lösung respektive Rohdaten r ermittelt wurden, eine entsprechende neue Lösung r' gesucht. Die neuen Simulationsparameter d',n' werden in einer testweisen Änderung 15 bestimmt. Die neue Lösung r' wird durch eine Interpolation 13 aus den Rohdaten r ermittelt. Dazu werden Standardverfahren wie beispielsweise eine Response Surface Methode eingesetzt. Die neue Lösung r' und ihre Kennwerte werden beispielsweise durch Geometrie und Materialzustand nach der Umformung dargestellt 16.

Die Interpolation kann auch indirekt geschehen, indem Korrelationen zwischen Simulationsparametern d,n und Lösungsdaten bestimmt werden, wobei hier mit dem Begriff "Lösungsdaten" Rohdaten und/oder Performance-Variablen bezeichnet werden. Solche Korrelationen können auch als Sensitivitäten der Lösungsdaten bezüglich der Simulationsparameter d,n betrachtet werden. Diese Sensitivitäten entsprechen im wesentlichen partiellen Ableitungen der Lösungsdaten bezüglich der Simulationsparameter d,n, um eine Referenzlösung herum, und werden durch eine stochastische Analyse ermittelt. Aufgrund von bekannten Sensitivitäten ist nun eine schnelle Neuberechung und Darstellung von Lösungsdaten einer Näherungslösung in der Nähe der Referenzlösung möglich. Dabei wird beispielsweise eine graphische Benutzeroberfläche mit Kontrollelementen erzeugt, mit welchen Kontrollelementen jeweils einzelne Simulationsparameter durch einen Benutzer interaktiv variierbar sind, und die Auswirkung auf ausgewählte Lösungsvariabeln oder Mengen von Lösungsvariabeln sofort graphisch auf einer Teiledarstellung oder in einer anderen Darstellung angezeigt wird.

Entsprechend den Simulationsparameten d,n, für welche die Resultate der Simulationen und insbesondere der stochastischen Analyse der Rohdaten r zufriedenstellend und/oder durch die Iteration optimiert sind, werden die Werkzeuge für den Umformprozess hergestellt und wird der Umformprozess durchgeführt.

Ein Softwaresystem gemäss der Erfindung weist eine Präprozessor-Einheit 21, eine Solver-Einheit 22 und eine Postprozessor-Einheit 23 auf. Die Präprozessor-Einheit 21 weist den Modellgenerator 1 und ein Programmmodul respektive Mittel für die Parametermodifikation 2 auf. Die Solver-Einheit 22 weist Programmmodule zur Parametervariation der Störparameter 3 und der Designparameter 4, und den Simulator 5 auf. Die Postprozessor-Einheit 23 weist vorzugsweise Programmmodule für die Berechnung von Performance-Variablen 8, die statistische Auswertung und optionale Darstellung von Performance-Variablen 9, die statistische Auswertung von Rohdaten 10, die Darstellung von statistischen Kennwerten der Rohdaten 11, und die Darstellung der Rohdaten 12 auf.

Die Solver-Einheit 22 und die Postprozessor-Einheit 23 weisen Programmmittel zum Zugriff auf den gemeinsam verwendeten Speicher 6 zur Speicherung der Rohdaten r auf.

### BEZUGSZEICHENLISTE

- 1: Modellgenerator
- 2: Parametermodifikation
- 3: Parametervariation der Störparameter
- 4: Parametervariation der Designparameter
- 5: Simulator (Solver)
- 6: Speicher
- 7: Definition von Performance-Variablen
- 8: Berechnung von Performance-Variablen
- 9: Statistische Auswertung von Performance-Variablen
- 10: Statistische Auswertung von Rohdaten
- 11: Darstellung von statistischen Kennwerten der Rohdaten
- 12: Darstellung der Rohdaten
- 13: Interpolation
- 14: Benutzerschnittstelle zur Modellanalyse
- 15: testweise Änderung
- 16: Darstellung
- 21: Präprozessor-Einheit
- 22: Solver-Einheit
- 23: Postprozessor-Einheit

## Patentansprüche

1. Verfahren zum Auslegen von Werkzeugen und/oder Prozessen für die Herstellung von Umformteilen, in welchem aus einem Satz von nominellen Simulationsparametern (d,n) durch Simulation (5) eines Umformprozesses Rohdaten (r) zur Beschreibung einer Geometrie und eines Zustandes eines umgeformtem Teiles berechnet werden, **dadurch gekennzeichnet, dass**
• aus dem Satz von nominellen Simulationsparametern (d,n) in einem Simulationsdurchlauf (5) ein Satz von Rohdaten (r) berechnet und gespeichert (6) wird,
• der vorangehende Schritt unter Variation der Simulationsparameter (d,n) um die nominellen Simulationsparameter (d,n) mehrmals wiederholt wird (5), und **dadurch** weitere Sätze von Rohdaten (r) erzeugt und gespeichert (6) werden, und
• aus einem Satz neuer Simulationsparameter d',n' und den gespeicherten Rohdaten r durch Interpolation ein neuer Satz von Rohdaten r' berechnet wird.

2. Verfahren gemäss Anspruch 1, wobei eine statistische Analyse (10) mehrerer oder aller der gespeicherten Sätze von Rohdaten (r) zur Berechnung statistischer Kennwerte (Cr) der Rohdaten (r) durchgeführt wird.

3. Verfahren gemäss Anspruch 2, wobei eine visuelle Darstellung von einem oder mehreren der statistischen Kennwerte (Cr) der Rohdaten (r) auf einer visuellen Darstellung eines am Umformprozess beteiligten Gegenstands, insbesondere des umgeformten Teiles, eines Teiles vor der Umformung oder der Werkzeuggeometrie, erzeugt wird (11).

4. Verfahren gemäss einem der Ansprüche 1 bis 3, wobei
• in einem weiteren, separaten Schritt aus den Sätzen von gespeicherten Rohdaten (r) in einem Analysedurchlauf (8) je ein zugeordneter Satz von Performance-Variablen (p) zur Charakterisierung bestimmter Eigenschaften des umgeformten Teiles zu mehreren der Sätze, vorzugsweise zu jedem Satz von Rohdaten (r) berechnet wird, und
• eine statistische Analyse (9) der Sätze von Performance-Variablen (p) zur Berechnung statistischer Kennwerte (Cp) der Performance-Variablen durchgeführt wird.

5. Verfahren gemäss einem der Ansprüche 1 bis 4, wobei die Variation (3,4) der Simulationsparameter (d,n) nach einem deterministischen oder einem stochastischen oder einem kombinierten Verfahren geschieht.

6. Verfahren gemäss einem der Ansprüche 4 bis 5, wobei ein Berechnungsverfahren zur Bestimmung einer oder mehrerer Performance-Variablen (p) modifiziert oder neu erstellt wird (7), und entsprechend aus den Sätzen von gespeicherten Rohdaten (r) modifizierte oder neue Performance-Variablen (p) berechnet werden (8).

7. Verfahren gemäss einem der Ansprüche 1 bis 6, wobei die Simulationsparameter (d,n) einerseits Designparameter (d) zur Beschreibung von kontrollierbaren Parametern der Werkzeuge und des Umformprozesses und andererseits Störparameter (n) zur Beschreibung von nicht kontrollierbaren Parametern der Werkzeuge und des Umformprozesses umfassen.

8. Verfahren gemäss einem der Ansprüche 3 bis 7, wobei eine visuelle Darstellung mindestens einer der Performance-Variablen (p) oder einer ihrer statistischen Kennwerte (Cp) in Kombination mit mindestens einer anderen Performance-Variablen (p) oder deren statistischen Kennwerte (Cp) oder Designparametern (d) oder Störparametern (n) oder deren vorgegebenen statistischen Kennwerten erzeugt wird.

9. Verfahren gemäss einem der Ansprüche 1 bis 8, wobei ein Grenzformänderungsdiagramm mit einer Mehrzahl von überlagerten Punktwolken oder diese charakterisierende visuelle Merkmale erzeugt wird, wobei jede Punktwolke die Dehnungen aller oder mindestens eines der Rechenpunkte aus einem der mehreren Sätze von Rohdaten (r) darstellt.

10. Verfahren gemäss einem der Ansprüche 1 bis 9, wobei die genannten Schritte mehrmals für veränderte nominelle Simulationsparameter (d,n) wiederholt werden.

11. Verfahren gemäss einem der Ansprüche 4 bis 10, **dadurch gekennzeichnet, dass**, um vergleichbare Performance-Variablen aus den einzelnen Simulationen zu erhalten, die Rohdaten der einzelnen Simulationen einander zugeordnet werden indem räumlich gleich oder nächst gelegene Rechenpunkte der einzelnen Simulationen einander zugeordnet werden.

12. Datenverarbeitungssystem zum Auslegen von Werkzeugen und/oder Prozessen für die Herstellung von Umformteilen, wobei das Datenverarbeitungssystem Mittel aufweist zur Durchführung des Verfahrens nach einem oder mehreren der Ansprüche 1 bis 11.

13. Computerprogramm zum Auslegen von Werkzeugen und/oder Prozessen für die Herstellung von Umformteilen, welches auf einer Datenverarbeitungseinheit ladbar und ausführbar ist, und welches bei der Ausführung das Verfahren nach einem oder mehreren der Ansprüche 1 bis 11 ausführt.

14. Datenträger, enthaltend ein Computerprogramm gemäss Anspruch 13.
